# EUROPEAN PATENT SPECIFICATION

(11) **EP 3 530 153 B1**
(45) Date of publication and mention of the grant of the patent: **23.12.2020**
(21) Application number: 19158766.6
(22) Date of filing: 22.02.2019
(51) Int. Cl.: A47J 31/06, A47J 31/36, B65D 85/804

(54) **PRE-PACKED CHARGE OF EDIBLE POWDER MATERIAL, AND BEVERAGE PREPARATION SYSTEM USING SAID CHARGE**
VORGEPACKTE LADUNG EINES ESSBAREN PULVERMATERIALS UND GETRÄNKEZUBEREITUNGSSYSTEM DAS BESAGTE LADUNG VERWENDET
CHARGE PRÉ-EMBALLÉE DE MATÉRIAU EN POUDRE COMESTIBLE ET SYSTÈME DE PRÉPARATION DE BOISSONS À L'AIDE DE LADITE CHARGE

(30) Priority: 23.02.2018 IT 201800002976
(43) Date of publication of application: 28.08.2019
(73) Proprietor: Caffé Pascucci Torrefazione S.P.A., 61010 Monte Cerignone (PU) (IT)
(72) Inventor: BARDAZZI, Bruno, 50059 Vinci FI (IT)
(74) Representative: Leucci, Lidia

(56) References cited:
- WO-A1-2012/164521
- WO-A1-2015/105410
- WO-A1-2016/013932
- WO-A1-2017/063680
- FR-A1- 3 035 085

## Description

The present invention relates to systems for the preparation of beverages, and in particular it relates to a pre-packaged charge of edible powder material, and a system for the preparation of beverages which uses said pre-packaged charge.

For over twenty years now, there have appeared on the market systems for the preparation of beverages, and in particular of coffee, which use pre-packaged charges. Many manufacturers make the container body in rigid material, and in many cases plastic materials are used, generally non-biodegradable. It goes without saying that the exponential growth of consumption in this sector has made the issue of disposing of millions and millions of pre-packaged exhausted charges, which in addition to all contain a product that is not only biodegradable but even fertilizer, more and more pressing year after year.

Naturally the problem lies predominantly in the disposal of the container body, generally conceived to preserve the qualities of the content, in particular coffee, and allow the machine to achieve the infusion in the best possible way. The pre-packaged charges have been gradually equipped with increasingly complex container bodies, made using also four different materials, and thus increasing the problems for their disposal.

On the other hand, systems that use pre-packaged charges with container bodies made of flexible materials such as non-woven fabric or filter paper, the so-called pods, do not yet guarantee a high quality product, particularly with reference to espresso coffee, especially in respect of the automatic loading and ejection of the exhausted pod as the said pod is not made in stable material; for this reason capsules made of plastic or more stable materials are the most used for automatic ejection machines.

In order to improve the environmental impact of this type of market, pre-packaged charges have been developed made of compostable material. Document EP2648579 describes a pre-packed charge having the container body made of compostable material, also according to the European standard EN 13342. The problem with this type of materials is above all related to maintaining the solidity of the structure of this container body at the end of the infusion. The solution envisaged in this document is a container body whose bottom wall is made of two coupled materials, one of which has a greater resistance to temperature.

FR3035085 A1 discloses a biodegradable capsule comprising the following composition (wt.% of dry matter): 20% - 60% starch, 3% - 20% protein, 15% - 60% cellulose, hemicellulose and lignin, 1% - 15% lipids and 0.01 % - 10% sugars.

The infusion system of the beverage provides for the perforation of the walls of the container body of the pre-packaged charge both on the supply side of the hot water under pressure and on the dispensing side of the infusion. It is quite clear that a system which involves making a plurality of holes on a wall of material with a low consistency must face problems from the point of view of the integrity of this wall after infusion. Furthermore, this system does not provide any type of filter between infusion and dispensing, therefore there is a risk that the perforating means might be clogged with fractions of coffee powder of greater size than those normally suspended in the infusion.

A first problem to be faced is therefore to use a material that does not need to be perforated, and that acts as a filter itself when infused, while providing a container body with a greater consistency than traditional pods. This consistency may allow the adoption of automatic or semi-automatic systems for inserting and removing pre-packaged charges in the infusion group, but must maintain intact the compostability features of the container body.

The aim of the present invention is to provide a system for the preparation of beverages which is able to overcome the problems described above, guaranteeing the delivery of an infusion of high organoleptic qualities, avoiding the breaking or crushing of the container body and capable of acting as a filter in the passage of the infusion to the dispensing means, so as to preserve them from clogging.

Object of the present invention is a pre-packaged charge of edible powder material, comprising a container body made of vegetable fiber pulp from seasonal crops such as sugar cane, rice, cotton, hemp, bamboo or the like; the vegetable fiber pulp has a lignin content of less than 5%, and this contributes both to its structural solidity, given that lignin tends to make paper fragile, and to its eco-compatibility, given that the substantial absence of lignin allows bleaching treatments definitely milder, and in some cases bleaching is not required at all. Vegetable fiber pulps in which the fibers have a length in the order of 5-15 mm will be preferred.

Advantageously, the container body is made by cold molding, and subsequently formed by steam under pressure. This treatment guarantees a relative waterproofing of the container body, avoiding the migration of the oils contained in the coffee powder. The treatment can be carried out both on the face of the wall of the container body facing inwards, and on the face of the wall of the container body facing outwards, depending on whether the mold has a continuous surface and the counter mold is perforated, or the other way around. In the first case, the internal face of the wall will be continuous, and the penetration of hot water under pressure must be somehow favored in the extraction phase, generating plastic deformations which nevertheless do not lead to the breaking of the wall itself. In the second case, the inner face of the wall will be discontinuous, and the hot water under pressure will penetrate into the wall of the container body, until the relative impermeability of the outer face of the wall of the container body is eliminated, allowing the passage of the infusion, but not the passage of dust.

A further object of the present invention is a system for the preparation of beverages comprising a pre-packaged charge of edible powder material, and an infusion unit adapted to cooperate with said pre-packaged charge, in which the pre-packaged charge comprises a container body made in the manner as above described, and wherein said infusion unit comprises an infusion chamber whose bottom wall is provided with a plurality of ducts communicating with the dispensing means, each of said ducts being arranged in correspondence with a relief or recess able to cause a plastic deformation of the bottom wall of the container body of the pre-packaged charge without causing it to break.

The deformations act in such a way as to weaken the compactness of the bottom wall by brittle, but not to compromise its filtering capacities. The material, which has lost rigidity and acquired permeability, is crossed by the infusion, retaining the coffee powder inside it.

Conveniently, the projections and / or recesses formed on the bottom wall of the infusion chamber will be made in such a way as not to cause the perforation or tearing of the bottom wall of the container body of the pre-packaged charge.

Particularly, with a bottom wall thickness of the container body between 0.6 and 1.2 mm and a weight/surface ratio of the container body between 150 and 450 g/m², each relief or recess will have a depth , or a projection, not exceeding 1.5 mm. The relief or recess will also have a maximum section of less than or equal to 10.0 mm. The ducts communicating with the dispensing means will have a section of 0.6-1.0 mm.

Preferably, the ducts communicating with the dispensing means and the relative reliefs and/or recesses will be equally distributed on the surface of the bottom wall of said infusion chamber. Many ducts may be provided, such as reliefs or recesses, as well as a relief or recess may be provided with several ducts communicating with the dispensing means.

Further advantages and features of the pre-packaged charge and of the system according to the present invention will become clear from the following description of some embodiments of the same provided, by way of non-limiting example, with reference to the tables of attached representations, in which:
Figure 1 is an exploded longitudinal section view of a first embodiment of the infusion unit of the system according to the present invention, at the time of the introduction of the pre-packaged charge;
Figures 2A and 2B are sectional views of the detail II of Figure 1, referred to two different embodiments;
Figure 3 is a longitudinal section view of the infusion assembly of Figure 1, in the post-infusion phase;
Figure 4 is a longitudinal section view of a second embodiment of the system infusion unit according to the invention, in the post-infusion phase;
Figure 5 is a longitudinal section view of a third embodiment of the system infusion unit according to the invention, in the post-infusion phase;
Figure 6 is a longitudinal section view of a fourth embodiment of the system infusion unit according to the invention, in the post-infusion phase;
Figure 7 is a longitudinal section view of a fifth embodiment of the system infusion unit according to the invention, in the post-infusion phase;
Figure 8 is a longitudinal section view of a sixth embodiment of the infusion unit of the system according to the invention, in the post-infusion phase;
figure 9 is a longitudinal section view of an alternative embodiment of the container body of the pre-packaged charge of the system according to the invention, inserted in a suitable execution variant of the infusion group, immediately before the infusion;
figure 10 is a view similar to that of figure 9, in post-infusion the phase;
Figure 11 is a longitudinal section view of a variant embodiment of the prepackaged charge according to the present invention;
figure 12 shows the pre-packaged charge of figure 11 in an infusion group substantially similar to that of figure 4;
Figures 13 to 15 are enlarged photographs of the back wall of pre-packaged charges of the system according to the present invention, used in three executive examples;
Figures 16 and 17 are enlarged photographs of the back wall of pre-packaged charges of the system according to the present invention, used in two comparative examples;
Figures 18 and 19 are enlarged photographs of the back wall of pre-packaged charges according to a variant embodiment of the present invention, used in two executive examples;
Figure 20 is an enlarged view relative to the bottom wall of an infusion assembly used in an executive example.

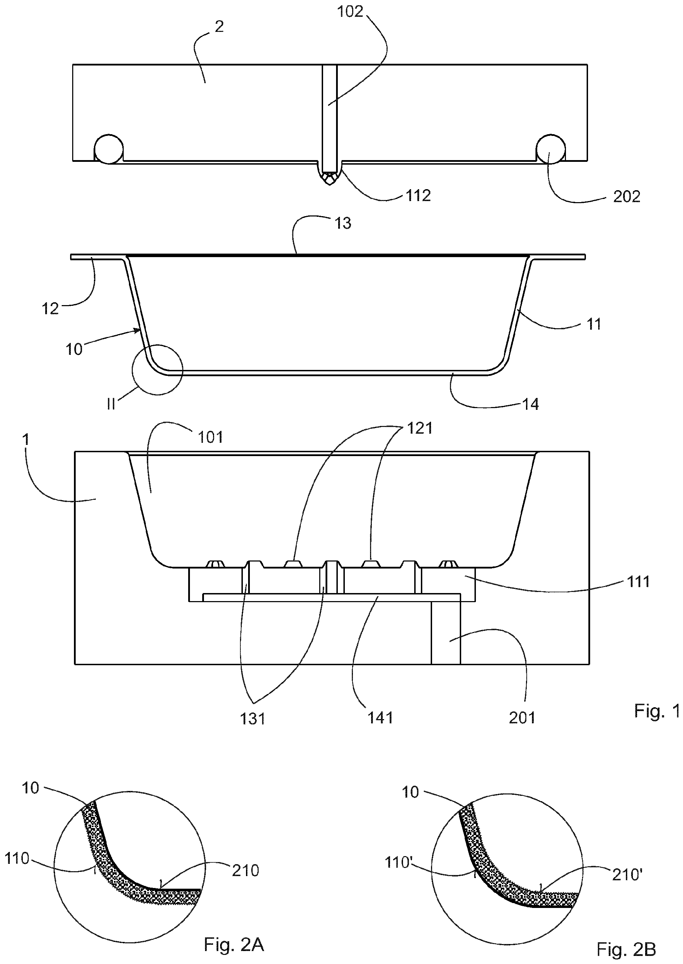

Figure 1 schematically shows a longitudinal section of a first embodiment of the infusion assembly according to the system of the present invention, in the step of introducing the pre-packaged charge; indicated with 10 is the container body of the charge, provided with a truncated cone-shaped side wall 11, which at the open end is provided with a protruding radial flange 12, on which the closing wall 13 is located, while at the opposite end is provided the back wall 14.

Figures 2A and 2B show the different possibility of constructing the wall of the container body 10, which has in figure 2A the face 210 facing inwards smooth and compact, while the face 110 facing outwards is discontinuous and rough. On the contrary, in Figure 2B the face 110 'is smooth and compact, while that facing inward 210' is discontinuous and wrinkled.

The infusion assembly comprises the portion 1 in which the infusion chamber 101 is formed, the bottom wall 111 of which is provided with a plurality of truncated pyramid reliefs 121, in the vicinity of which the ducts 131 are formed, which through the wall bottom 111 reach the dispensing manifold 141 which is in turn in fluid communication with the beverage delivery conduit 201.

The portion 2 is superimposed on the portion 1, comprising the supply duct 102 of the hot water under pressure, the perforating means 112 of the wall 13 for closing the pre-packaged charge and the sealing means 202 which cooperate with the radial flange 12 to ensure the hydraulic seal of the system.

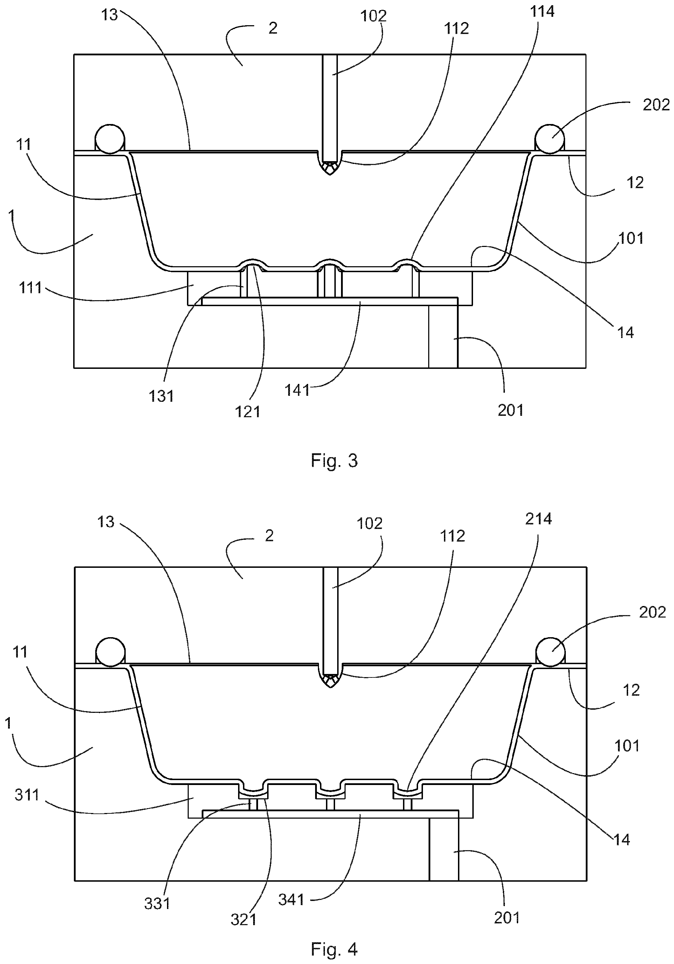

In figure 3 the infusion unit is illustrated after the beverage has been dispensed; equal parts correspond to the same numbers. As can be seen, the reliefs 121 have produced plastic deformations 114 on the bottom wall 14 of the container body 10 of the pre-packaged charge.

Figure 4 is a figure similar to Figure 3, except for the fact that the bottom wall 311 of the infusion chamber 101 is provided with a plurality of cavities 321, on the bottom of which the ducts 331 are open, communicating with the manifold 341, in turn connected to the dispensing duct 201. In this case the deformations 214 which have formed on the bottom wall 14 of the container body are everted.

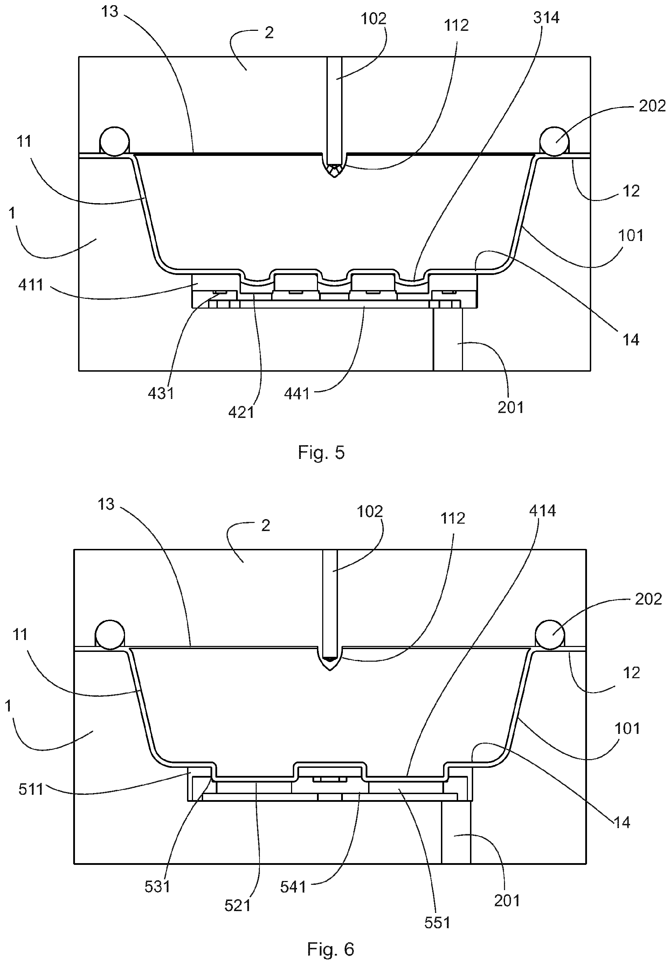

Figure 5 is similar to figures 3 and 4 described above, except that the bottom wall 411 of the infusion chamber 101 has cavities 421 provided on the bottom with a plurality of openings 431 communicating with the delivery manifold 441. Also in this case, similarly to what has been described with reference to Figure 3, the bottom wall 14 of the container body has the everted deformations 314.

Figure 6 still shows a further variant with respect to that described in Figure 5; also in this case the cavities 521 of the bottom wall 511 are provided with a plurality of openings 531 communicating with the distribution manifold 541. The cavities 521 are larger, and in particular their bottom wall is constituted by movable pistons 551, equipped with drive means in a direction perpendicular to the plane of the bottom wall 511.

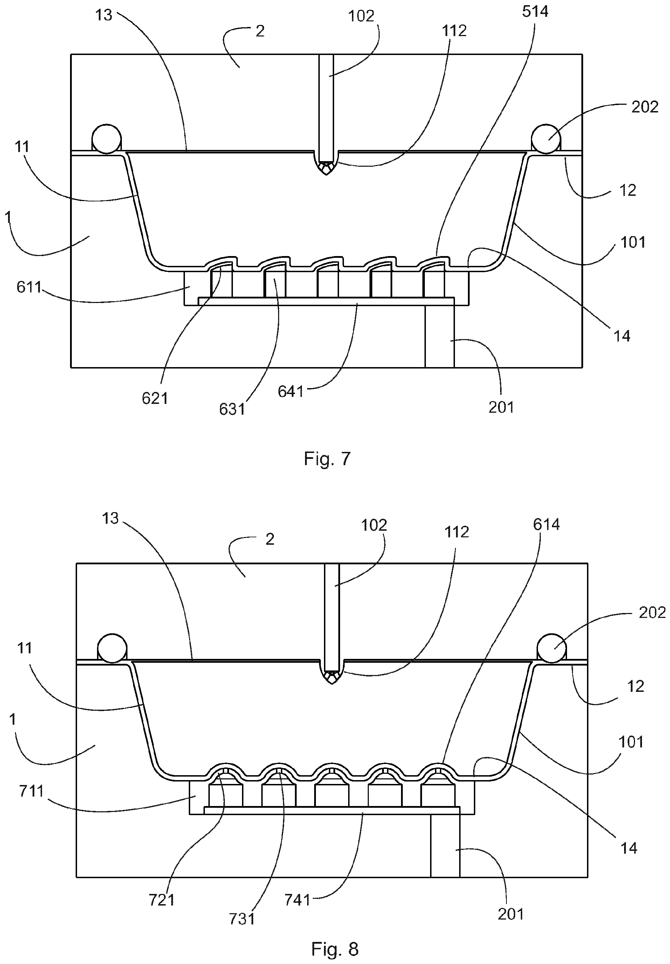

In figure 7, a further similar section of the infusion unit, at the time of completed extraction, illustrates, while maintaining the same numerals for the same parts, another embodiment of the present invention. The bottom wall 611 of the infusion chamber 101 is in this case provided with a plurality of reliefs 621 open on one side, below which the ducts 631 are formed, communicating with the manifold 641 connected to the delivery conduit 201. The bottom wall 14 of the container body has the plastic deformations 514.

In the embodiment of Figure 8, in which the same parts correspond to the same numerals, the infusion unit comprises, on the bottom wall 711 of the infusion chamber 101, a plurality of dome-shaped reliefs 721, centrally provided with the ducts 731, communicating with the 741 supply manifold. The deformations 614 are evident on the bottom wall 14 of the container body.

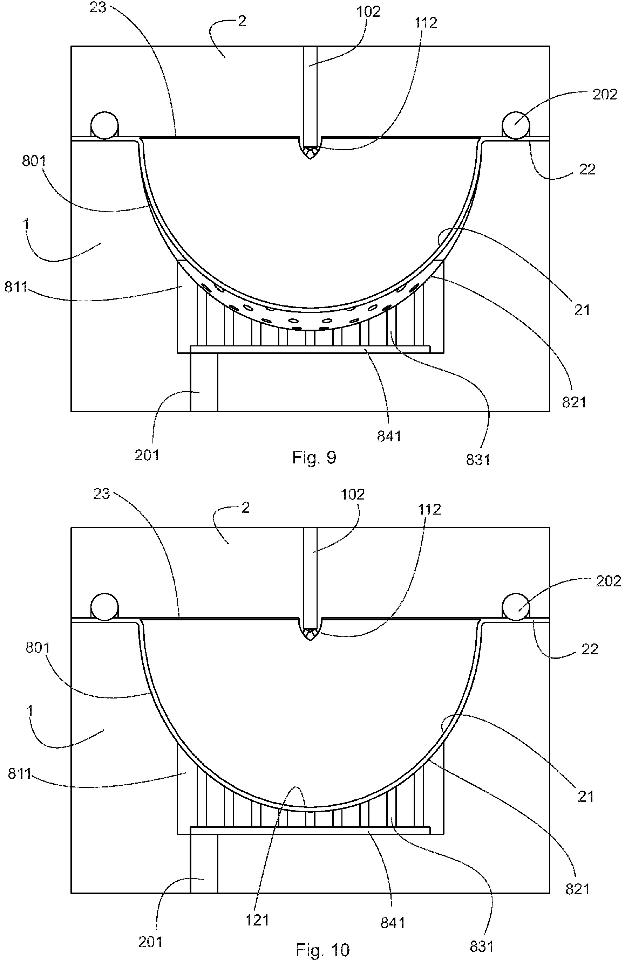

Figure 9 shows an alternative embodiment of the container body of the pre-packaged charge of the system according to the invention. The container body in this case comprises a hemispherical dome 21, provided with a radial flange 22 and a closing plane 23 coupled thereto. The infusion chamber 801 is formed substantially in a complementary manner to the dome21, except for the bottom wall 811, which has an accentuated ellipsoidal cavity shape 821. The bottom wall 811 of the chamber 801 is crossed by a plurality of ducts 831, which open into the delivery manifold 841, communicating with the dispensing duct 201.

Figure 10 shows the infusion group of Figure 9 at the end of the beverage dispensing; equal parts correspond to the same numbers. As can be seen, the hemispherical dome 21 has undergone the deformation 121, going to adhere to the ellipsoidal cavity formed in the bottom wall 811 of the infusion chamber 801.

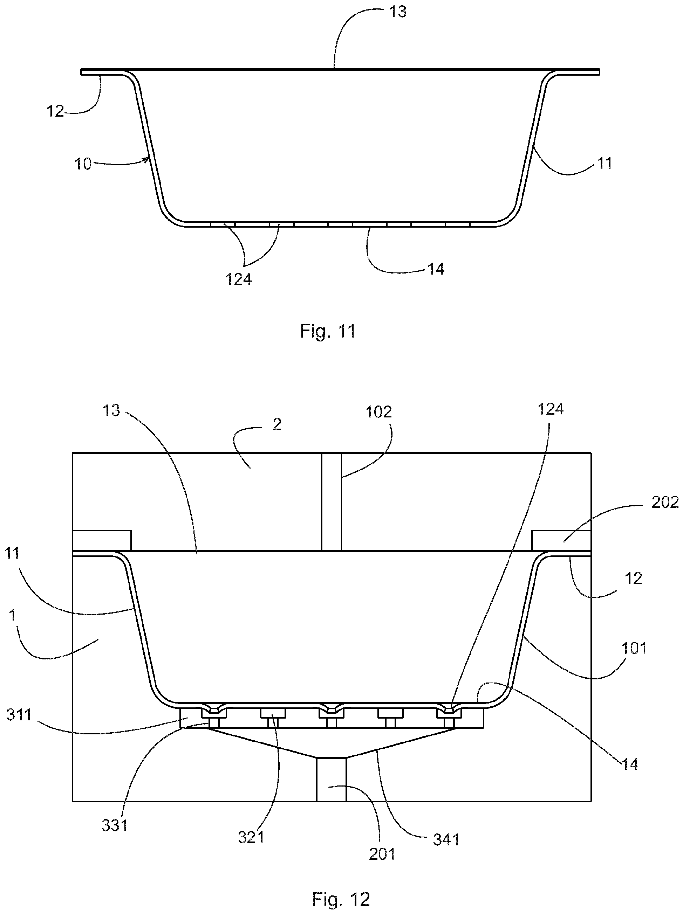

Figure 11 illustrates a further embodiment of the container body of the pre-packed charge according to the present invention; equal parts correspond to the same numbers; the figure shows the through slits 124 formed through the bottom wall 14. This variant embodiment is intended for preferential use with a lyophilized or soluble product which must therefore be completely discharged and does not need to be filtered.

Figure 12 illustrates the pre-packaged charge of Figure 11 inserted in an infusion unit similar to that of Figure 4; also in this case the same parts correspond to the same numbers. It can be seen that in this case the slots 124, which meet statistically the cavities 321 formed on the bottom wall 311 of the infusion chamber 101, are deformed to allow the complete discharge of the edible product dissolved by the flow of hot water under pressure fed by the duct 102.

The operation of the pre-packaged charge and of the system according to the present invention will appear evident from the following. As has already been pointed out in the introduction, the prepacked charge according to the present invention has a container body made of a material, typically paper, and in particular cardboard, obtained from the processing of vegetable fiber derived from seasonal crops, such as hemp, rice, cotton, panic, sorghum, sugar cane or the like. The use of these materials has two important aspects from the point of view of the effectiveness of the system according to the invention.

On the one hand, these materials are generally low, or very low in lignin, in percentages that are generally less than 5%, and in many cases fall below 1%. The low lignin content makes the paper made with these raw materials less fragile, since it is this component that makes the paper fragile, for example the one made with wood pulp from trees. Furthermore, the absence of lignin reduces the bleaching needs of the product, and any bleaching action can be performed with less aggressive products, hydrogen peroxide instead of Cl-based compounds, and with reduced environmental impact.

Furthermore, the cellulose fibers that can be used for the production of paper derived from seasonal crops are in many cases obtained from the scraps of a primary processing, and therefore have a negligible initial cost. Their complete compostability and productivity per hectare compared to wood pulp from trees make them definitely preferable to the latter; consequently, the use of this type of material in a system such as the preparation of beverages from pre-packed fillings would render a consumption cycle virtuous which instead is currently producing an almost uncontrollable quantity of waste that is very difficult to dispose of.

Another decidedly relevant aspect is given by the length of the cellulose fibers obtained using renewable vegetable raw materials, which allows to create a package with sufficiently resistant walls, even if permeable by the infusion; the vegetative fibers preferably used are of a length not less than 5.0 mm and preferably between 5.0 mm and 15.0 mm.

The material, formed with the application of water vapor under pressure, is able to provide a stable container body, resistant to humidity, and with a good impermeability to fats and oils. Several of these materials have already been adopted for making disposable tableware and containers for packaging raw and cooked foods, with excellent results in terms of conservation stability. On the basis of these previous uses it was initially thought to adopt, in the beverage dispensing system according to the invention, a container body of the prepackaged charge in which the inner face is continuous and compact, as illustrated in Figure 2A; subsequently the use of the variant shown in Figure 2B was also evaluated.

In the system according to the present invention, the excellent mechanical properties of the material with which the container body is made are coupled to a suitable deformation, induced by reliefs, as in the case of the embodiments of figures 1, 2, 6 and 7, or recesses, as in the case of the embodiments of Figures 3, 4, 5, 8 and 9. The deformation allows the structure of the fibers of the paper to lie down according to the pressure exerted by the hot water injected through the conduit 102 and the drilling means 112, but it must not cause the wall of the container body to break. The wall, in the areas subject to deformation, behaves like a filter, and as such allows the passage of the percolate, preventing the passage of the particles of alimentary powder, for example coffee.

In several cases, as in Figures 1, 2, 4, 5, 9 and 10, several ducts are provided at a cavity or relief. In the case of figures 9 and 10 there is even a single ellipsoidal cavity 821 in which open all the ducts 831 communicating with the delivery manifold 841. In this case, the container body of the pre-packaged charge does not include a real bottom wall, since it is formed as a hemispherical dome, but the bottom of the aforesaid dome is pushed towards the bottom of the cavity 821, imparting to the dome 21 of the container body the ellipsoidal deformation 121.

In the embodiments of figures 5 and 6, to each cavity correspond four angularly equidistant radial openings located on the bottom of the cavity itself; in the embodiment of Figure 6, the bottom wall of each cavity 521 is movable thanks to the piston 551. The mobility of the piston can allow, on the one hand, to regulate, within suitable limits, the depth of the deformation and, consequently, to vary the speed of infusion delivery. Furthermore, the piston can be provided with movement towards the inside of the infusion chamber 101, so as to allow the expulsion of the exhausted pre-packaged charge, which otherwise would have to be taken manually, given the temporary coupling between the deformations of the wall of container body and reliefs or grooves in the bottom wall of the brewing chamber.

As can be seen from the embodiments described above, the shape and the dimensions of the reliefs and / or recesses present on the bottom wall of the infusion chamber are of decisive importance in the functionality of the system according to the present invention. Some experimental tests have been carried out in order to verify the effectiveness of the system, and the results are reported in the following executive examples. Two comparative tests have also been carried out to establish the operating limit conditions of the system.

### Executive example 1

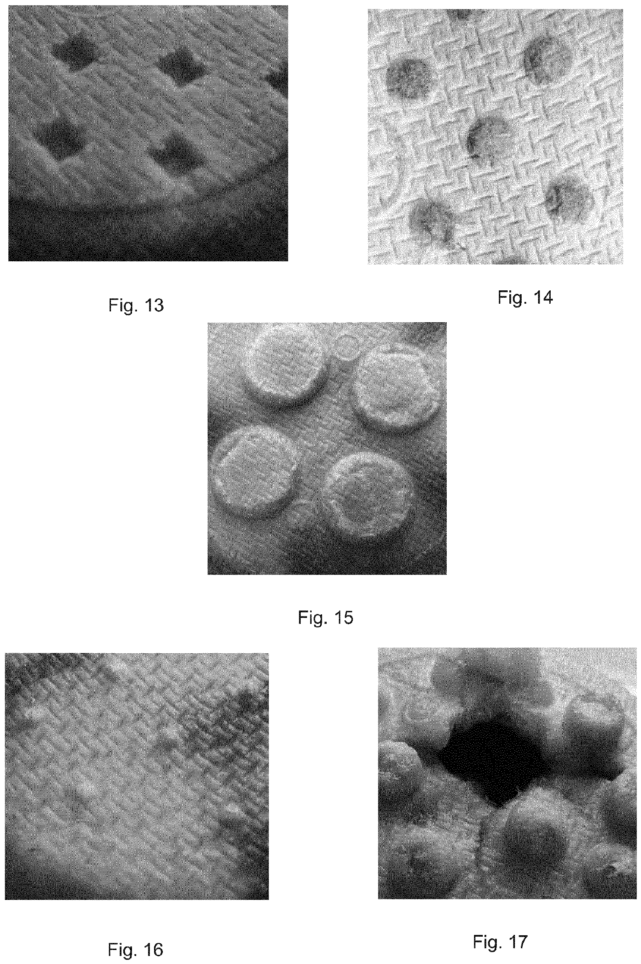

A pre-packaged charge of the type illustrated in Figures 1 to 7, and formed according to the embodiment shown in Figure 2A, has been made with a container body made of sugar-cane paper, of a thickness of about 0.8 mm and approximately 350 g/m², filled with coffee and inserted in an infusion chamber of the type illustrated in Figures 1 and 3, that is to say provided on the bottom wall with a plurality, specifically 18, of truncated pyramid reliefs, 1.2 mm high and of maximum section at the base of 3.0 mm; the ducts have a section of 0.8 mm. As shown in the photograph in Figure 13, the deformations did not cause the bottom wall to break; the infusion was complete, even if rather rapid, and the coffee provided a good result both from an aesthetic and organoleptic point of view. Sediments in the norm.

### Executive example 2

A pre-packaged charge similar to that of the executive example 1 was inserted in an infusion chamber provided on the bottom wall with 18 cavities of the type illustrated in Figure 4, 3.0 mm in diameter and 1.5 mm deep, with axial ducts of 0.8 mm section. As shown in the photograph in Figure 14, the deformations did not cause the bottom wall of the container body to break. The infusion in this case was optimal also from the point of view of speed, with an excellent organoleptic result; sediments in the norm.

### Executive example 3

A pre-packaged charge similar to that of the executive example 1 was inserted in an infusion chamber provided on the bottom wall with 4 cavities of the type illustrated in Figure 6, of 9.0 mm wide and 1.5 mm deep, with radial ducts of 0.8 mm section. As shown in the photograph in Figure 15, the deformations did not cause the bottom wall of the container body to break. Also in this case the infusion was optimal from the point of view of speed, with an excellent organoleptic result; sediments in the norm.

### Comparative example 1

A pre-packaged charge similar to that of the executive example 1 was inserted in an infusion chamber provided on the back wall with 18 axial ducts of 1.0 mm section, without any cavity or relief. As shown in the photograph in Figure 16, the deformations are minimal, and do not cause the bottom wall to break. The infusion in this case is decidedly poor or almost nothing, and extremely slow; the quality of the infusion from an organoleptic point of view is poor.

### Comparative example 2

A pre-packaged charge similar to that of the executive example 1 was inserted in an infusion chamber provided on the bottom wall with 18 cavities of the type illustrated in Figure 4, of 4.0 mm width and 2.0 mm of depth, with axial ducts of 0.8 mm section. As can be seen from the photograph in Figure 17, the deformations caused the breaking of the bottom wall of the container body, with a large leakage of the material. The infusion in this case was too rapid and watery, and with a large presence of coarse sediments.

### Executive example 4

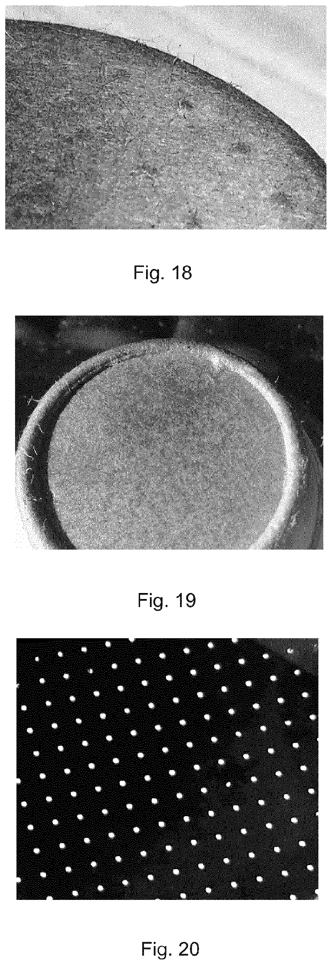

A pre-packaged charge quite similar to that of the executive example 1, but carried out according to the embodiment illustrated in Figure 2B, was introduced in an infusion chamber similar to that used in the comparative example 1. As shown in the photograph of Figure 18 , there were no deformations that could damage the integrity of the container body; the infusion was optimal both from the point of view of the quantity of the infusion and of the speed, with an excellent organoleptic result; sediments in the norm.

### Executive example 5

A pre-packaged charge similar to that of the executive example 4 was introduced in an infusion chamber having on the bottom wall a conventional type filter for espresso coffee machines of the type illustrated in Figure 20, with a plurality of through holes of diameter of about 0.7 mm. As shown in the photograph in Figure 19, the back wall has been completely permeated by the infusion, without any damage to the integrity of the container body. Also in this case the infusion was optimal both from the point of view of the quantity of the infusion and of the speed, with an excellent organoleptic result; sediments in the norm.

From the examples given above it can be concluded that the system according to the present invention allows, in its best operating conditions, to obtain an infusion of excellent quality, to preserve the dispensing means of the machine from clogging and scaling, to obtain an exhausted pre-packaged charge still intact and completely compostable. Naturally, considerable care must be taken in the type of interaction that occurs between the bottom wall of the container body and the bottom wall of the infusion chamber.

It should also be emphasized that while the container body made with the internal face of the wall continuous and compact needs to be deformed to obtain an acceptable infusion delivery, in the opposite case, ie when the outer face is continuous and compact and the inner face it is discontinuous and wrinkled, the water succeeds in penetrating the wall without compromising the structural integrity of the container body, but it does not need the deformations induced by the bottom wall of the infusion chamber to exit it.

## Claims

1. Pre-packaged charge of edible powder material, comprising a container body (10) made of vegetable fiber pulp from seasonal crops such as sugar cane, rice, cotton, hemp, bamboo or the like, **characterised in that** the vegetable fiber pulp has a lignin content less than 5%.

2. Pre-packaged charge according to claim 1, wherein the vegetable fiber pulp comprises fibers of a length between 5.0-15.0 mm.

3. Pre-packaged charge according to claim 1 or 2, wherein the container body is made by cold molding, and subsequently formed with steam under pressure.

4. Pre-packaged charge according to any of the preceding claims 1 to 3, in which the inner face of the wall of said container body is continuous and compact, while the outer face is discontinuous and wrinkled.

5. Pre-packaged charge according to any of the preceding claims 1 to 3, in which the outer face of the wall of said container body is continuous and compact, while the inner face is discontinuous and wrinkled.

6. Beverage preparation system comprising a pre-packaged charge of edible powder material, and an infusion assembly adapted to cooperate with said pre-packaged charge, wherein the pre-packaged charge is a pre-packaged charge according to any of the previous claims from 1 to 5, and wherein said infusion assembly comprises an infusion chamber whose bottom wall is provided with a plurality of ducts communicating with the dispensing means, each of said ducts being arranged in correspondence with a relief or recess able to cause a plastic deformation of the back wall of the container body of the pre-packed charge without causing it to break.

7. System according to claim 6, in which the thickness of the bottom wall of the container body is between 0.6 and 1.2 mm, and the container body has a weight/surface ratio between 150 and 450 g/m².

8. System according to claim 7, wherein each relief or recess has a depth, or a projection, of not more than 1.5 mm.

9. System according to claim 6 or 7, wherein each relief or recess has a maximum cross-section smaller than or equal to 10.0 mm.

10. System according to any of the preceding claims from 6 to 9, wherein the ducts communicating with the dispensing means have a section of 0.6-1.0 mm.

11. System according to any of the preceding claims from 6 to 10, wherein the ducts communicating with the dispensing means and the relative reliefs and/or recesses are uniformly distributed on the surface of the bottom wall of said infusion chamber.

12. System according to any of the preceding claims from 6 to 11, wherein the ducts communicating with the dispensing means are in a greater number than the said reliefs and/or recesses formed on the bottom wall of the said infusion chamber.

## Patentansprüche

1. Vorverpackte Ladung von essbarem Pulvermaterial, umfassend einen Behälterkörper (10) aus Pflanzenfaserzellstoff aus saisonalen Kulturen wie Zuckerrohr, Reis, Baumwolle, Hanf, Bambus oder dergleichen, der **dadurch gekennzeichnet ist, dass** der Pflanzenfaserzellstoff ein Lignin aufweist Gehalt weniger als 5%.

2. Vorverpackte Ladung nach Anspruch 1, wobei der Pflanzenfaserzellstoff Fasern mit einer Länge zwischen 5,0 und 15,0 mm umfasst.

3. Vorverpackte Ladung nach Anspruch 1 oder 2, wobei der Behälterkörper durch Kaltformen hergestellt und anschließend mit Dampf unter Druck geformt wird.

4. Vorverpackte Ladung nach einem der vorhergehenden Ansprüche 1 bis 3, wobei die Innenfläche der Wand des Behälterkörpers durchgehend und kompakt ist, während die Außenseite diskontinuierlich und faltig ist.

5. Vorverpackte Ladung nach einem der vorhergehenden Ansprüche 1 bis 3, wobei die Außenseite der Wand des Behälterkörpers durchgehend und kompakt ist, während die Innenfläche diskontinuierlich und faltig ist.

6. Getränkezubereitungssystem, umfassend eine vorverpackte Ladung aus essbarem Pulvermaterial und eine Infusionsanordnung, die zur Zusammenarbeit mit der vorverpackten Ladung angepasst ist, wobei die vorverpackte Ladung eine vorverpackte Ladung gemäß einem der vorherigen Ansprüche von 1 bis 5 ist und wobei die Infusionsanordnung eine Infusionskammer umfasst, deren Bodenwand mit einer Vielzahl von Kanälen versehen ist, die mit den Abgabemitteln in Verbindung stehen, wobei jeder der Kanäle entsprechend einer Entlastung oder Aussparung angeordnet ist, die eine plastische Verformung der Rückwand verursachen kann des Behälterkörpers der vorverpackten Ladung, ohne dass diese bricht.

7. System nach Anspruch 6, bei dem die Dicke der Bodenwand des Behälterkörpers zwischen 0,6 und 1,2 mm liegt und der Behälterkörper ein Gewichts / Oberflächen-Verhältnis zwischen 150 und 450 g/m² aufweist.

8. System nach Anspruch 7, wobei jedes Relief oder jede Aussparung eine Tiefe oder einen Vorsprung von nicht mehr als 1,5 mm aufweist.

9. System nach Anspruch 6 oder 7, wobei jedes Relief oder jede Aussparung einen maximalen Querschnitt hat, der kleiner oder gleich 10,0 mm ist.

10. System nach einem der vorhergehenden Ansprüche von 6 bis 9, wobei die mit den Abgabemitteln kommunizierenden Kanäle einen Abschnitt von 0,6 bis 1,0 mm aufweisen.

11. System nach einem der vorhergehenden Ansprüche von 6 bis 10, wobei die mit den Abgabemitteln verbundenen Kanäle und die relativen Entlastungen und / oder Aussparungen gleichmäßig auf der Oberfläche der Bodenwand der Infusionskammer verteilt sind.

12. System nach einem der vorhergehenden Ansprüche von 6 bis 11, wobei die mit den Abgabemitteln in Verbindung stehenden Kanäle in einer größeren Anzahl als die an der Bodenwand der Infusionskammer ausgebildeten Reliefs und / oder Aussparungen sind.

## Revendications

1. Charge pré-emballée de matière en poudre comestible, comprenant un corps de récipient (10) fait de pulpe de fibres végétales provenant de cultures saisonnières telles que la canne à sucre, le riz, le coton, le chanvre, le bambou ou similaire, **caractérisée en ce que** la pulpe de fibres végétales a un contenu de lignine inférieure à 5%.

2. Charge pré-emballée selon la revendication 1, dans laquelle la pulpe de fibres végétales comprend des fibres d'une longueur comprise entre 5,0 et 15,0 mm.

3. Charge pré-emballée selon la revendication 1 ou 2, dans laquelle le corps de récipient est fabriqué par moulage à froid, puis formé avec de la vapeur sous pression.

4. Charge pré-emballée selon l'une quelconque des revendications 1 à 3 précédentes, dans laquelle la face interne de la paroi dudit corps de récipient est continue et compacte, tandis que la face externe est discontinue et plissée.

5. Charge pré-emballée selon l'une quelconque des revendications 1 à 3 précédentes, dans laquelle la face externe de la paroi dudit corps de récipient est continue et compacte, tandis que la face interne est discontinue et plissée.

6. Système de préparation de boisson comprenant une charge pré-emballée de matière en poudre comestible, et un ensemble d'infusion adapté pour coopérer avec ladite charge pré-emballée, dans lequel la charge pré-emballée est une charge pré-emballée selon l'une quelconque des revendications précédentes de 1 à 5, et dans lequel ledit ensemble d'infusion comprend une chambre d'infusion dont la paroi inférieure est pourvue d'une pluralité de conduits communiquant avec les moyens de distribution, chacun desdits conduits étant agencé en correspondance avec un relief ou évidement apte à provoquer une déformation plastique de la paroi arrière du corps du conteneur de la charge pré-emballée sans provoquer sa rupture.

7. Système selon la revendication 6, dans lequel l'épaisseur de la paroi inférieure du corps de récipient est comprise entre 0,6 et 1,2 mm, et le corps de récipient a un rapport poids / surface compris entre 150 et 450 g/m².

8. Système selon la revendication 7, dans lequel chaque relief ou évidement a une profondeur, ou une saillie, d'au plus 1,5 mm.

9. Système selon la revendication 6 ou 7, dans lequel chaque relief ou évidement a une section transversale maximale inférieure ou égale à 10,0 mm.

10. Système selon l'une quelconque des revendications 6 à 9 précédentes, dans lequel les conduits communiquant avec les moyens de distribution ont une section de 0,6 à 1,0 mm.

11. Système selon l'une quelconque des revendications 6 à 10 précédentes, dans lequel les conduits communiquant avec les moyens de distribution et les reliefs et / ou évidements relatifs sont uniformément répartis sur la surface de la paroi inférieure de ladite chambre d'infusion.

12. Système selon l'une quelconque des revendications 6 à 11 précédentes, dans lequel les conduits communiquant avec les moyens de distribution sont en plus grand nombre que lesdits reliefs et / ou évidements formés sur la paroi inférieure de ladite chambre d'infusion.
